# EUROPEAN PATENT APPLICATION

(11) **EP 4 093 148 A1**
(43) Date of publication of application: **23.11.2022**
(21) Application number: 22740745.9
(22) Date of filing: 21.03.2022
(51) Int. Cl.: H05B 3/03, H05B 3/14, H05B 3/20

(54) **FAR INFRARED ELECTRIC HEATING FILM BASED ON CARBON NANOTUBE AND PREPARATION METHOD THEREFOR**

(30) Priority: 23.03.2021 CN 202110308452; 23.07.2021 CN 202110837262
(71) Applicant: SUZHOU HANANO MATERIALS TECHNOLOGY CO., LTD., Suzhou, Jiangsu 215000 (CN)
(72) Inventor: CHEN, Xinjiang, Suzhou Jiangsu 215000 (CN); LI, Feng, Suzhou Jiangsu 215000 (CN); SHEN, Zhenhui, Suzhou Jiangsu 215000 (CN); ZHOU, Hongbo, Suzhou Jiangsu 215000 (CN); YUAN, Fang, Suzhou Jiangsu 215000 (CN)
(74) Representative: Bryers LLP
(86) International application number: PCT/CN2022/081948
(87) International publication number: WO 2022/199512

(57) **Abstract**

The present invention provides a cnts-based far-infrared electrothermal film comprising a base film, electrodes and a carbon film. The electrode is formed by coating electrode paste on the base film by means of slit coating and then drying and curing the electrode paste, the carbon film is formed by coating carbon film slurry on the above base film formed with the electrode by means of slit coating and then drying and curing the carbon film slurry. And when coating the carbon film slurry, the carbon film slurry covers at least part or all of the electrode, so that the part or all of the electrode is located between the carbon film and the base film, the carbon film slurry is coated intermittently to form a plurality of carbon films distributed at intervals on one base film, and the carbon film slurry contains cnts and hydrosoluble polyurethane resin. Through the organic combination of structural design and slit coating process, the far-infrared electrothermal film of the present disclosure not only has good film adhesion and a thin film thickness, but also has good safety and long service life, and can be produced with high production efficiency.

## Description

### Technical Field of the Invention

The present disclosure relates to a far-infrared electrothermal film, especially to a carbon nanotube-based far-infrared electrothermal film and a preparation method therefor.

### Background of the Invention

With the development of science and technology, the electrothermal film has won the favor of more and more consumers as a comfortable and energy-saving far-infrared radiation floor heating system. As a far-infrared radiation heating product, electrothermal films with different heating areas, shapes and powers also have different energy-saving effects due to their conversion efficiency of electrothermal radiation. According to the thermal image measurement method defined in GB/T7287-2008, in the calculation formula of conversion efficiency of electrothermal radiation η=Sσ\(Tᵣ⁴-T₀⁴ )/P, for the same power, the larger the heating area, the higher the average radiation temperature, and the higher the conversion efficiency of electrothermal radiation. Therefore, the electrothermal film that generates heat on the whole surface theoretically has a very high conversion efficiency of electrothermal radiation.

In the prior art, the conductive layer of the electrothermal film is usually made by coating conductive inks by screen printing or gravure printing process, most of the conductive inks use graphite powder or chopped carbon fiber powder as conductive additives, or on the basis of conductive additives such as graphite powder, other conductive additives are added. The electrothermal film technology of the prior art has the following problems: 1. In terms of the product itself, in order to achieve the set electrical performance, it is necessary to use a relatively large amount of micron-sized conductive agent, which will cause the adhesion force of the coating film to decrease, the thickness of the coating film to be thick and brittle, which limits the application of electrothermal film; at the same time, the electrothermal conversion efficiency of micron-level conductive agents is not as high as that of nano-level conductive agents such as carbon nanotubes(cnts) and graphene, so the use of nano-level materials with high electrothermal conversion efficiency such as cnts can also improve Tᵣ in the above formula, further improving the conversion efficiency of electrothermal radiation; 2. In order to ensure the adhesion of the coating film, it is often considered to reserve a blank space, and use the adhesive film to fix the conductive layer to avoid delamination and debonding of the conductive layer of the electrothermal film, but in this way, each conductive layer must be made into a relatively small pattern (for example, usually made into a strip or porous shape), which cannot obtain high conversion efficiency of electrothermal radiation; 3. In terms of the film coating process, the screen printing process has low work efficiency, poor uniformity of printing coating thickness, and at the same time, the screen plate has a limited service life, and the screen plate needs to be replaced regularly, which is costly, and the gravure printing process has disadvantages such as the applicability of the ink physical properties (the ink viscosity should meet the requirements of gravure roll transfer) are narrow and water-based low-viscosity conductive ink cannot be coated; in addition, whether it is screen printing or gravure printing, it is difficult to achieve continuous preparation of large-area coating films; 4. It is known that the micro-concave continuous integral surface coating technology can realize continuous integral surface coating, but when using this technology to prepare the electrothermal film, when the continuously prepared electrothermal film is subsequently cut into standard length sheets, it may lead to that the conductive layer is easily exposed at the cutting edge, especially the shielding layer of the electrothermal film is very easy to contact the conductive layer for short circuit and ignition, which is not conducive to the overall insulation and packaging of the electrothermal film, particularly when encountering moisture in practical applications, it will cause electrothermal film to leak or shorten the service life.

To sum up, the electrothermal film technology in the prior art cannot obtain electrothermal film products with good film adhesion, thin film thickness, good safety and long service life with high production efficiency.

### Summary of the Invention

The technical problems to be solved by the present disclosure is to overcome the deficiencies of the prior art, and provide a far-infrared electrothermal film with good film adhesion, thin film thickness, good safety and long service life, and this electrothermal film can be produced with high production efficiency.

The present disclosure further provides a preparation method for a far-infrared electrothermal film with high production efficiency, the electrothermal film obtained by this method not only has good film adhesion and a thin film thickness, but also has good safety and long service life.

To solve the above technical problems, a technical solution employed by the present disclosure is:
A preparation method for a far-infrared electrothermal film, comprises:
forming electrode paste on a base film by means of slit coating, and drying and curing the electrode paste to form an electrode;
forming carbon film slurry on the base film by means of slit coating, the carbon film slurry covers at least part or all of the electrode, and drying and curing the carbon film slurry to form a carbon film, thereby forming a far-infrared electrothermal film;
wherein, coating the carbon film slurry on the surface of the base film intermittently to form a plurality of carbon films distributed at intervals to form the far-infrared electrothermal film, the plurality of carbon films cover part or all of the electrode.

According to a further implementation of the present disclosure, cutting the far-infrared electrothermal film at areas between two adjacent carbon films to form a plurality of electrothermal film modules. In this way, the electrothermal film modules of the required size can be obtained without exposing the conductive layer, thereby improving the safety performance and service life of the product.

In some preferred implementations according to the present disclosure, the carbon film slurry is composed of water, a dispersant, multi-walled cnts, hydrosoluble polyurethane and ethylene glycol. In a specific and preferred implementation, the mass ratio of water, dispersant, multi-walled cnts, hydrosoluble polyurethane and ethylene glycol is (80 - 78): (2 - 3): (6 - 7): 10: 2, and the dispersant is particularly preferably D192 dispersant (that is, BYK-192 dispersant). The electrothermal film prepared by combining the carbon film slurry with the structure and process of the present disclosure has excellent adhesion of 5B.

In some preferred implementations according to the present disclosure, the method employs slit extrusion coating equipment comprising a first slit extrusion coating component for coating the electrode paste and a second slit extrusion coating component for coating the carbon film slurry. The first slit extrusion coating component comprises a first liquid supply system and a first slit extrusion coating head connected to the first liquid supply system. The second slit extrusion coating component comprises a second liquid supply system and a second slit extrusion coating head connected to the second liquid supply system. Each of the first liquid supply system and the second liquid supply system comprises a liquid storage tank, a vacuum defoaming tank, a metering pump, an electric valve and a feeding pipe. The method comprises the following steps:
S1, forming a plurality of electrodes distributed at intervals on the base film by means of the slit extrusion coating equipment, wherein a fixed volume of electrode paste is periodically and quantitatively output to the first slit extrusion coating head through the first liquid supply system;
S2, forming a plurality of carbon layers distributed at intervals on the base film formed with electrodes by means of the slit extrusion coating equipment, the carbon layers cover part or all of the electrodes, wherein a fixed volume of carbon film slurry is periodically and quantitatively output to the second slit extrusion coating head through the second liquid supply system.

Preferably, the first slit extrusion coating head and the second slit extrusion coating head have a slit width of 75 - 77 µm, particularly preferably 75 µm. After a lot of experimental studies, it was unexpectedly found that when the slit width is about 75 µm, the precision of coating can be precisely controlled, and the coating can be carried out smoothly for a long time without problems such as clogging.

Further, after many experimental studies, it has been shown that when coating the carbon film slurry, when the feeding flow rate of the carbon film slurry is controlled to be 150 - 500 ml/min, particularly preferably 150 - 300 ml/min, it is helpful to precisely control the coating precision and to carry out the coating smoothly for a long time.

According to a further implementation of the present disclosure, in step S1, unwinding the base film into a station in the slit extrusion coating equipment corresponding to the first slit extrusion coating component through a double-station unwinder, and coating the electrode paste on the surface of the base film, and then placing the base film coated with the electrode paste on the surface into a first oven, drying and curing at 140 - 160 °C for 3 - 10 min to form an electrode. In step S2, transporting the base film formed with the electrode to a station corresponding to the second slit extrusion coating component through a guide rail, coating the carbon film slurry, and placing the base film formed with the electrode and the carbon slurry coating in a second oven, and then curing and drying at 100 - 130 °C for 3 - 10 min to obtain the electrothermal film.

In some implementations according to the present disclosure, the carbon film slurry has a particle size D90 of 0.5 - 75 µm, and the electrode paste has a particle size D90 of 1 - 75 µm.

In some implementations according to the present disclosure, the carbon film slurry contains cnts and hydrosoluble polyurethane resin.

Another technical solution employed by the present disclosure is: A cnts-based far-infrared electrothermal film, the far-infrared electrothermal film comprises a base film, an electrode and a carbon film which are stacked. The electrode is formed by coating electrode paste on the base film by means of slit coating and then drying and curing the electrode paste. The carbon film is formed by coating carbon film slurry on the above base film formed with the electrode by means of slit coating and then drying and curing the carbon film slurry. When coating the carbon film slurry, the carbon film slurry covers at least part or all of the electrode, so that the part or all of the electrode is located between the carbon film and the base film. The carbon film slurry is coated intermittently to form a plurality of carbon films distributed at intervals on one base film. The carbon film slurry contains cnts and hydrosoluble polyurethane resin.

According to some specific implementations of the present disclosure, the carbon film has a width of 500 - 1000 mm and a length of 0.01 - 6.45 m. In some preferred implementations, the carbon film has a length of 0.95 - 6.45 m.

According to the present disclosure, the sheet resistance of the carbon film can reach 700 - 1750 Ω/sq.

According to the present disclosure, the electric-thermal radiation conversion efficiency of the electrothermal film can reach 75 - 85 %. In some implementations according to the present disclosure, the electric-thermal radiation conversion efficiency of the electrothermal film is above 80 %. In some other implementations according to the present disclosure, the electric-thermal radiation conversion efficiency of the electrothermal film is above 83 %.

According to the present disclosure, the electrode may have a width of 10 - 20 mm and a sheet resistance of 20 - 50 mΩ/sq.

According to a preferred implementation of the present disclosure, the electrode has a thickness of 3 - 7 µm, and the carbon film has a thickness of 5 - 20 µm. Further preferably, the thickness of the electrode is less than the thickness of the carbon film. The carbon film is covered on the electrode and the thickness is controlled to help improve the adhesion between the electrode and the carbon film.

According to some preferred implementations of the present disclosure, the plurality of carbon films extends along the length direction of the base film, and the distance between two adjacent carbon films is preferably 10 - 50 mm. In some other preferred implementations, the distance between two adjacent carbon films is preferably 30 - 50 mm.

Preferably, the electrode paste is coated intermittently, so that a plurality of electrodes distributed at intervals along the length direction of the base film are formed on one side of one base film, and the plurality of carbon films and the plurality of electrodes are one-to-one correspondingly disposed. In a preferred embodiment, the carbon films and the electrodes correspondingly disposed have the same length.

Preferably, the electrodes are respectively disposed on both sides of the base film in the width direction, each of the carbon films extends between two electrodes, and the projected area of the carbon film on the base film is larger than that of the base film between two electrodes.

In some implementations according to the present disclosure, the far-infrared electrothermal film further comprises an insulating film that encapsulates the surface of the electrothermal film, the insulating film completely covers the electrothermal film, and a shielding layer is stacked on the surface of the insulating film to combine the electrothermal film with the shielding layer over the entire surface.

In some other implementations according to the present disclosure, the far-infrared electrothermal film comprises a first insulating film, a second insulating film, and a shielding layer, and the first insulating film, the electrothermal film, the second insulating film and the shielding layer are stacked.

Further, the width ratio of the shielding layer to the electrothermal film can be 0.7: 1 - 0.9: 1;

Further, the shielding layer generally has a thickness of 7 - 200 µm, preferably 100 - 200 µm, further preferably 150 - 200 µm, more preferably 190 - 200 µm. In some embodiments, the shielding layer has a thickness of 7 - 10 µm.

Further, the first insulating film and the second insulating film generally have a thickness of 50 - 250 µm, respectively.

Due to the use of the above technical solutions, the present disclosure has the following advantages over the prior art:
Through the organic combination of structural design and slit coating process, the far-infrared electrothermal film of the present disclosure not only has good film adhesion and a thin film thickness, but also has good safety and long service life. Furthermore, the far-infrared electrothermal film of the present disclosure can be produced with high production efficiency.

The preparation method for a far-infrared electrothermal film of the present disclosure can efficiently and stably realize the preparation of the far-infrared electrothermal film, and the prepared electrothermal film has good film adhesion, a thin film thickness, good safety and long service life. In addition, the slit coating extrusion equipment used in the method can be realized by simply modifying the liquid supply system and designing the slit width in the existing slit coating extrusion equipment, and the equipment requirements are not high.

### Brief Description of the Drawings

Figure 1 is a schematic diagram of the slit extrusion coating equipment adopted in a typical implementation case of the present disclosure;
Figure 2 is the relative radiation energy spectrum curve diagram of the far-infrared electrothermal film prepared in a typical implementation case of the present disclosure (the detection environment conditions are: 20 °C, 60 %RH);
Figure 3 is a schematic diagram of an electrode provided in a typical embodiment of the present disclosure;
Figure 4 is a schematic diagram of an electrode and a carbon film provided in a typical embodiment of the present disclosure.

### Detailed Description of Exemplary Embodiments

Compared with other metal particles or graphite powder, cnts have a larger aspect ratio and excellent electrical conductivity, and can form a conductive network by adding a small amount to polymer materials such as resins. By the intertwining and linking of cnts, it is easy to form a 3D conductive network, thereby forming a conductive layer with uniform resistance and isotropy. When a metal electrode is arranged on the cnts conductive layer, and the electrode is energized, the current passes through the cnts 3D conductive network to form a surface heating unit with a uniform heating temperature. However, relying on the existing technology, it is impossible to efficiently prepare a full-surface cnts-based electrothermal film with good safety.

In view of the deficiencies in the prior art, the inventor of the present application has been able to propose the technical solution of the present disclosure after long-term research and extensive practice. In the following, the technical solution, its implementation process and the principle are further explained.

This embodiment of the present disclosure further provides a preparation method for a far-infrared electrothermal film, which comprises:
forming electrode paste on a base film by means of slit coating, and drying and curing the electrode paste to form an electrode;
forming carbon film slurry on the base film by means of slit coating, the carbon film slurry covers at least part or all of the electrode, and drying and curing the carbon film slurry to form a carbon film, thereby forming a far-infrared electrothermal film.

Further, the preparation method specifically comprises: coating the electrode paste on the surface of the base film intermittently to form a plurality of electrodes distributed at intervals.

Further, the preparation method specifically comprises: coating the carbon film slurry on the base film intermittently to form a plurality of carbon films distributed at intervals to form the far-infrared electrothermal film, the plurality of carbon films cover part or all of the electrode; cutting the far-infrared electrothermal film at areas between two adjacent carbon films to form a plurality of electrothermal film modules.

Further, the electrode paste (also known as silver paste) comprises the following components: divalent acid ester, saturated polyester resin, organic bentonite and flake silver powder in a mass ratio of (37 - 34): (12 - 11): 1: (50 - 55).

Further, the electrode paste has a particle size D90 of 1 - 75 µm.

Further, the carbon film slurry comprises the following components: water, D192 dispersant, multi-walled cnts, hydrosoluble polyurethane and ethylene glycol in a mass ratio of (80 - 78): (2 - 3): (6 - 7): 10: 2.

Further, the electrode paste has a particle size D90 of 1 - 75 µm.

Further, the preparation method specifically comprises: drying the electrode paste at 140 - 160 °C for 3 - 10 min to form the electrodes.

Further, the preparation method specifically comprises: drying the carbon film slurry at 100 - 130 °C for 3 - 10 min to form the carbon films.

Further, the preparation method specifically comprises: encapsulating the surface of the electrothermal film using an insulating film, and completely covering the electrothermal film with the insulating film.

Further, the preparation method specifically comprises: stacking a shielding layer on the surface of the electrothermal film, and combining the electrothermal film with the shielding layer over the entire surface.

This embodiment of the present disclosure further provides a far-infrared electrothermal film prepared by the described preparation method, and the far-infrared electrothermal film comprises a first insulating film, an electrothermal film, a second insulating film, and a shielding layer that are sequentially stacked, and the electrothermal film comprises a carbon film and an electrode which are stacked.

Further, the carbon film has a width of 500 - 1000 mm, a length of 0.01 - 6.45 m, a thickness of 5 - 20 µm, and a sheet resistance of 700 - 1750 Ω/sq. In some implementations, the carbon film has a length of 0.95 - 6.45 m.

Further, the electrode has a width of 10 - 20 mm, a thickness of 3 - 7 µm, and a sheet resistance of 20 - 50 mΩ/sq.

Further, the width ratio of the shielding layer to the electrothermal film can be 0.7: 1 - 0.9: 1.

Further, the shielding layer has a thickness of 7 - 200 µm, preferably 100 - 200 µm, further preferably 150 - 200 µm, more preferably 190 - 200 µm. In some embodiments, the shielding layer has a thickness of 7 - 10 µm.

Further, the first insulating film and the second insulating film have a thickness of 50 - 250 µm, respectively.

Further, the conversion efficiency of electrothermal radiation of the electrothermal film is 75 - 85 %.

In the following, the technical solution, its implementation process, and the principle are further explained, unless otherwise specified, all raw materials used in the present disclosure are known to those skilled in the art.

This embodiment provides a far-infrared electrothermal film comprising a first insulating film, an electrothermal film, a second insulating film, and a shielding layer that are sequentially stacked, and the electrothermal film comprises a carbon film and an electrode which are stacked.

Specifically, the carbon film has a width of 500 - 1000 mm, a length of 0.01 - 6.45 m, a thickness of 5 - 20 µm, and a sheet resistance of 700 - 1750 Ω/sq. The electrode is a silver paste electrode, and the electrode has a width of 10 - 20 mm, a thickness of 3 - 7 µm, and a sheet resistance of 20 - 50 mΩ/sq. The width ratio of the shielding layer to the electrothermal film can be 0.7: 1 - 0.9: 1, and the shielding layer has a thickness of 7 - 10 µm. The first insulating film and the second insulating film have a thickness of 50 - 250 µm, respectively. In some implementations, the carbon film has a length of 0.95 - 6.45 m.

The terminology used herein to describe the embodiments is not intended to limit the scope. The articles "a", "an" and "the" are the singular forms having one referent, but the use of the singular form herein should not preclude the presence of a plurality of referents. In other words, there may be one or more of elements referred to in the singular unless the context clearly dictates otherwise. It will be further understood that, when used herein, the terms "comprising (comprise/s)", "containing (contain/s)" enumerates the presence of stated features, items, steps, operations, elements and/or components, but does not exclude one or more other features, items, steps, operations, elements, components, and/or the presence or addition of groups thereof.

Unless otherwise defined, all terms (including technical and scientific terms) used herein are to be understood according to the conventions of the art. It is also to be understood that unless expressly defined herein, terms of common usage are also to be understood in accordance with the conventions of the relevant art rather than an idealized or overly formalized meaning.

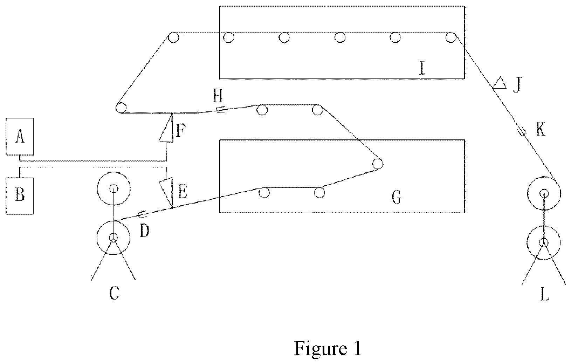

The above-mentioned far-infrared electrothermal film is formed by using the slit extrusion coating equipment as shown in Figure 1. The slit extrusion coating equipment mainly comprises a double-station unwinder C, a first deviation correction device (unwinding deviation correction device) D, a silver paste slit extrusion coating component E, a second deviation correction device H, a first oven G, a carbon slurry slit extrusion coating component F, a second oven I, an online detection machine J, a third deviation correction device K and a winder L.

Specifically, the double-station unwinder C comprises two unwinding gas expanded shafts driven by a servo motor, a worm gear motor turning system and a constant tension system, and the first deviation correction device is arranged between the double-station unwinder and the silver paste slit extrusion coating component; wherein, the silver paste slit extrusion coating component E comprises a first liquid supply system B and a first slit extrusion coating head, and the first slit extrusion coating head is connected to the first liquid supply system B. The carbon slurry slit extrusion coating component F comprises a second liquid supply system A and a second slit extrusion coating head, and the second liquid supply system A is connected to the second slit extrusion coating head. Each of the first liquid supply system B and the second liquid supply system A comprises a liquid storage tank, a vacuum defoaming tank, a metering pump, an electric valve and a feeding pipe, etc., the metering pump in the first liquid supply system B may periodically and quantitatively output a fixed volume of silver paste, and cooperate with the opening and closing of the electric valve to realize intermittent coating of the slit extrusion coating head; the metering pump in the second liquid supply system B may output a fixed volume of carbon slurry at a flow rate of 150 - 300 ml/min, and cooperate with the opening and closing of the electric valve to realize intermittent coating of the slit extrusion coating head, and the base material linear speed of the winder is adjusted to 5 - 10 m/min to achieve carbon film patterning on the base material. In order to obtain thin silver paste electrodes and carbon slurry films with good flexibility, the slit width of the silver paste slit extrusion coating component E and the carbon slurry slit extrusion coating component F is preferably set to 75 µm. It should be noted that the slit extrusion coating heads, liquid storage tanks, vacuum defoaming tanks, metering pumps, electric valves, feeding pipes, deviation correction devices, ovens, a detection machine, a winder, etc. in the slit extrusion coating equipment used in the present disclosure are all known components/equipment.

In a specific embodiment according to the present disclosure, the electrode paste (or silver paste) comprises the following components: divalent acid ester, saturated polyester resin, organic bentonite and flake silver powder in a mass ratio of (37 - 34): (12 - 11): 1: (50 - 55).

In a specific embodiment according to the present disclosure, the carbon film slurry comprises the following components: water, D192 dispersant (BYK-192 waterborne wetting dispersant), multi-walled cnts, hydrosoluble polyurethane and ethylene glycol in a mass ratio of (80 - 78): (2 - 3): (6 - 7): 10: 2.

In some specific embodiments, the silver paste has a particle size D90 of 65 µm.

In some specific embodiments, the carbon slurry has a particle size D90 of 10 µm.

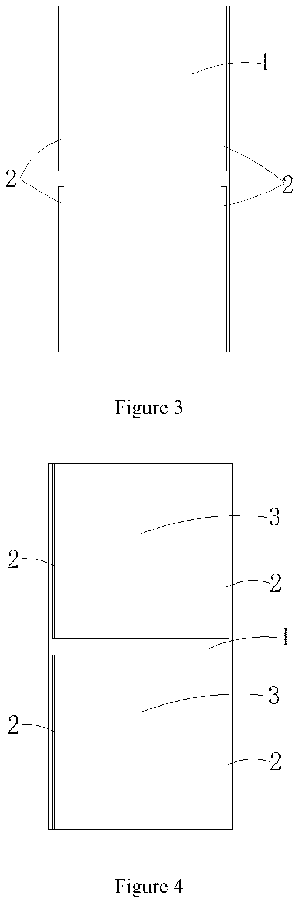

Specifically, the preparation method for a far-infrared electrothermal film in an embodiment of the present disclosure comprises: forming electrode paste on a base film 1 by means of slit coating, and drying and curing the electrode paste to form an electrode 2, as shown in Figure 3;

Forming carbon film slurry on the base film 1 by means of slit coating, the carbon film slurry covers at least part or all of the electrode 2, and drying and curing the carbon film slurry to form a carbon film 3, thereby forming a far-infrared electrothermal film, as shown in Figure 4.

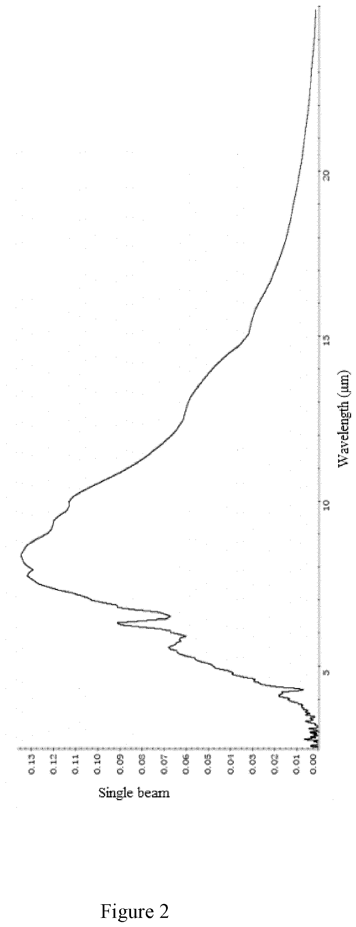

The relative radiation energy spectrum curve diagram of the far-infrared electrothermal film prepared according to the above embodiments is shown in Figure 2, and the conversion efficiency of electrothermal radiation of the electrothermal film provided by the present disclosure is 75 - 85 %.

Specifically, a process for a far-infrared electrothermal film may comprise:
Step 1, unwinding the base film into a station in the slit extrusion coating equipment corresponding to the silver paste slit extrusion coating component through a double-station unwinder, and coating the silver paste on the surface of the base film, wherein the silver paste comprises the following components: divalent acid ester, saturated polyester resin, organic bentonite and flake silver powder in a mass ratio of (37 - 34): (12 - 11): 1: (50 - 55), and the silver paste has a particle size D90 of 65 µm;
Step 2, placing the base film coated with the silver paste on the surface into a first oven, drying and curing at 140 - 160 °C for 3 - 10 min to form a silver paste electrode;
Step 3, transporting the base film formed with the silver paste electrode to a station corresponding to the carbon slurry slit extrusion coating component through a guide rail, and coating the carbon film slurry (or called carbon slurry) to form a carbon slurry coating or carbon film and causing the carbon slurry coating to cover the electrode, wherein, the carbon film slurry comprises the following components: water, D192 dispersant, multi-walled cnts, hydrosoluble polyurethane and ethylene glycol in a mass ratio of (80 - 78): (2 - 3): (6 - 7): 10: 2, and the carbon film slurry has a particle size D90 of 10 µm;
Step 4, placing the base film formed with the silver paste electrode and the carbon slurry coating in a second oven, and then curing and drying at 100 - 130 °C for 3 - 10 min to obtain the electrothermal film;
Step 5, cooling the electrothermal film by an air cooler and then entering an on-line detection machine, detecting at least the thickness and sheet resistance of the electrothermal film, correcting the deviation by a third deviation correction device, and finally carrying out the winding;
Step 6, film coating and encapsulating the electrothermal film with PET film on the entire surface by a hot melt adhesive coating machine, and winding up;
Step 7, laminating a shielding layer on the entire surface of the electrothermal film by a roll-to-roll laminating machine, and winding up.

In the method for manufacturing a far-infrared electrothermal film provided by an embodiment of the present disclosure, performing electrode coating through a silver paste slit extrusion coating head, and drying and curing in a first oven, and entering a carbon slurry slit extrusion coating head to perform carbon slurry coating, and then drying and curing in a second oven, and then detecting and winding online.

The method for manufacturing a far-infrared electrothermal film provided by an embodiment of the present disclosure can realize the simultaneous and efficient coating of the silver paste electrode and the carbon slurry coating (i.e., carbon film, the same below), which improves the production efficiency and reduces the product defect rate;
In the formula of electrode paste and carbon film slurry provided by the embodiment of the present disclosure, the hydroxyl groups as well as groups such as urethane bonds, ester bonds, ether bonds and other groups of saturated polyester resin and water-based polyurethane resin, form hydrogen bonds with a certain strength with the polar groups on the surface of PET base film, so the adhesion between the electrode, the carbon film and the PET base film can reach 5B, which improves the structural stability of the electrothermal film.

In addition, according to the method for manufacturing a far-infrared electrothermal film provided by the embodiment of the present disclosure, the prepared electrothermal film has a plurality of carbon film units distributed at intervals, and can be cut along the spaced area during cutting, and there is no problem of easy leakage of electricity at the cutting edge in the existing production process.

Further, the present disclosure can periodically and quantitatively deliver the carbon slurry for coating by adjusting the metering pump and the opening and closing of the electromagnetic valve of the feeding system of the carbon slurry slit extrusion coating head, thereby realizing the intermittent coating of the carbon slurry, and when the electrothermal film module is cut along the part of base film without carbon slurry, it can effectively solve the problem of edge electric leakage.

The conversion efficiency of electric radiation of the far-infrared electrothermal film provided by the present disclosure is much higher than that of the existing electrothermal film, and when it is applied to the far-infrared radiation floor heating, the conversion efficiency of far-infrared radiation can quickly realize the instant heating needs of floor and space heating, so as to realize the heating purpose of instant heating, which is beneficial for users to realize intelligent heating, behavioral energy saving, and eliminate energy waste.

The present disclosure will be further described below in conjunction with the embodiments. However, the present disclosure is not limited to the following embodiments. The implementation conditions adopted in the embodiments can be further adjusted according to different requirements of specific use, and the unremarked implementation conditions are the conventional conditions in the industry. The technical features involved in the various embodiments of the present disclosure can be combined with each other as long as they do not conflict with each other.

The raw materials used in the following embodiments themselves are all known substances, and can be obtained through various ways, one of which is a common way of purchasing from commercial channels.

### Embodiment 1

This embodiment provides a process for manufacturing a far-infrared electrothermal film, which comprises the following steps:
Step 1, unwinding the base film into a station in the slit extrusion coating equipment corresponding to the silver paste slit extrusion coating component through a double-station unwinder, and coating the silver paste on the surface of the base film intermittently, wherein the silver paste comprises the following components: divalent acid ester (dimethyl nylon acid), saturated polyester resin (SKYBON ES-100), organic bentonite and flake silver powder in a mass ratio of 37: 12: 1: 50, and the silver paste has a particle size D90 of 65 µm; the silver paste slit extrusion coating component have a slit width of 75 µm;
Step 2, placing the base film coated with the silver paste on the surface into a first oven, drying and curing at about 150 °Cfor about 5 min to form a plurality of silver electrodes distributed at intervals;
Step 3, transporting the base film formed with the silver paste electrode to a station corresponding to the carbon slurry slit extrusion coating component through a guide rail, and coating the carbon film slurry (or called carbon slurry) to form a carbon slurry coating or carbon film, and at least covering the electrodes with the carbon slurry coating, wherein, the carbon film slurry comprises the following components: water, D192 dispersant (BYK-192 waterborne wetting dispersant), multi-walled cnts, hydrosoluble polyurethane and ethylene glycol in a mass ratio of 80: 2: 6: 10: 2, and the carbon film slurry has a particle size D90 of 10 µm; the carbon slurry slit extrusion coating component have a slit width of 75 µm;
Step 4, placing the base film formed with the silver paste electrode and the carbon slurry coating in a second oven, and then curing and drying at about 130 °Cfor about 3 min to obtain the electrothermal film;
Step 5, cooling the electrothermal film by an air cooler and then entering an on-line detection machine, detecting at least the thickness and sheet resistance of the electrothermal film, correcting the deviation by a third deviation correction device, and finally carrying out the winding;
Step 6, film coating and encapsulating the electrothermal film with PET film on the entire surface by a hot melt adhesive coating machine, and winding up;
Step 7, laminating a shielding layer on the entire surface of the electrothermal film by a roll-to-roll laminating machine, and winding up.

In the far-infrared electrothermal film obtained in this embodiment, the electrode has a width of 10 mm, a thickness of 3 µm, and a sheet resistance of 50 mΩ/sq; the carbon film has a width of 500 mm, a length of 0.95 m, a thickness of 5 µm, and a sheet resistance of 1750 Ω/sq. The adhesion of electrode, carbon film and PET base film reaches 5B. Detected according to GB/T7287-2008, the conversion efficiency of electrothermal radiation of the electrothermal film of this embodiment is 83 %.

### Embodiment 2

This embodiment provides a process for manufacturing a far-infrared electrothermal film, which is basically the same as Embodiment 1, and the difference is:
The carbon film slurry comprises the following components: water, D192 dispersant (BYK-192 waterborne wetting dispersant), multi-walled cnts, hydrosoluble polyurethane and ethylene glycol in a mass ratio of 79: 2: 6: 10: 2.

In the far-infrared electrothermal film obtained in this embodiment, the electrode has a width of 15 mm, a thickness of 5 µm, and a sheet resistance of 40 mΩ/sq; the carbon film has a width of 800 mm, a length of 4 m, a thickness of 10 µm, and a sheet resistance of 1000 Ω/sq. The adhesion of electrode, carbon film and PET base film of the electrothermal film provided by this embodiment reaches 5B. Detected according to GB/T7287-2008, the conversion efficiency of electrothermal radiation of the electrothermal film of this embodiment is 84 %.

### Embodiment 3

This embodiment provides a process for manufacturing a far-infrared electrothermal film, which is basically the same as Embodiment 1, and the difference is:
The carbon film slurry comprises the following components: water, D192 dispersant (BYK-192 waterborne wetting dispersant), multi-walled cnts, hydrosoluble polyurethane and ethylene glycol in a mass ratio of 78: 3: 7: 10: 2.

In the far-infrared electrothermal film obtained in this embodiment, the electrode has a width of 20 mm, a thickness of 7 µm, and a sheet resistance of 20 mΩ/sq; the carbon film has a width of 1000 mm, a length of 6.45 m, a thickness of 20 µm, and a sheet resistance of 700 Ω/sq. The adhesion of electrode, carbon film and PET base film of the electrothermal film provided by this embodiment reaches 5B. Detected according to GB/T7287-2008, the conversion efficiency of electrothermal radiation of the electrothermal film of this embodiment is 84.5 %.

### Comparative example 1

This embodiment provides a process for manufacturing a far-infrared electrothermal film, which is similar to that of Embodiment 1, but the order of forming the carbon films and electrodes is opposite to that of Embodiment 1.

Under the condition that other conditions remain the same, the adhesion of electrode, carbon film and PET base film of the prepared electrothermal film reaches 4B. Detected according to GB/T7287-2008, the conversion efficiency of electrothermal radiation of the electrothermal film of this embodiment is 78 %.

### Comparative example 2

This embodiment provides a process for manufacturing a far-infrared electrothermal film, which is basically the same as Embodiment 1, and the difference is ethylene glycol is not added to the carbon film slurry.

Under the condition that other conditions remain the same, the adhesion of electrode, carbon film and PET base film of the prepared electrothermal film reaches 4B. Detected according to GB/T7287-2008, the conversion efficiency of electrothermal radiation of the electrothermal film of this embodiment is 75 %.

The above detailed describes the present disclosure, and the embodiments are only for contributing to understand the methods and the core concept of the present disclosure, and intended to make those skilled in the art being able to understand the present disclosure and thereby implement it, and should not be concluded to limit the protective scope of this disclosure.

## Claims

1. A preparation method for a far-infrared electrothermal film, **characterized in that,** it comprises:
forming electrode paste on a base film by means of slit coating, and drying and curing the electrode paste to form an electrode;
forming carbon film slurry on the base film by means of slit coating, the carbon film slurry covers at least part or all of the electrode, and drying and curing the carbon film slurry to form a carbon film, thereby forming a far-infrared electrothermal film;
wherein, coating the carbon film slurry on the surface of the base film intermittently to form a plurality of carbon films distributed at intervals to form the far-infrared electrothermal film, the plurality of carbon films cover part or all of the electrode.

2. The preparation method according to claim 1, **characterized in that,** cutting the far-infrared electrothermal film at areas between two adjacent carbon films to form a plurality of electrothermal film modules.

3. The preparation method according to claim 1, **characterized in that,** the carbon film slurry comprises the following components: water, D192 dispersant, multi-walled cnts, hydrosoluble polyurethane and ethylene glycol in a mass ratio of (80 - 78): (2 - 3): (6 - 7): 10: 2.

4. The preparation method according to claim 1, **characterized in that,** the method adopts slit extrusion coating equipment, the slit extrusion coating equipment comprises a first slit extrusion coating component for coating the electrode paste and a second slit extrusion coating component for coating the carbon film slurry, the first slit extrusion coating component comprises a first liquid supply system and a first slit extrusion coating head connected to the first liquid supply system, the second slit extrusion coating component comprises a second liquid supply system and a second slit extrusion coating head connected to the second liquid supply system, and each of the first liquid supply system and the second liquid supply system comprises a liquid storage tank, a vacuum defoaming tank, a metering pump, an electric valve and a feeding pipe, the method comprises the following steps:
S1, forming a plurality of electrodes distributed at intervals on the base film by means of the slit extrusion coating equipment, wherein a fixed volume of electrode paste is periodically and quantitatively output to the first slit extrusion coating head through the first liquid supply system;
S2, forming a plurality of carbon layers distributed at intervals on the base film formed with electrodes by means of the slit extrusion coating equipment, the carbon layers cover part or all of the electrodes, wherein a fixed volume of carbon film slurry is periodically and quantitatively output to the second slit extrusion coating head through the second liquid supply system.

5. The preparation method according to claim 4, **characterized in that,** the first slit extrusion coating head and the second slit extrusion coating head have a slit width of 75 - 77 µm; and/or, when coating the carbon film slurry, the feeding flow rate of the carbon film slurry is controlled to be 150 - 500 ml/min.

6. The preparation method according to claim 4, **characterized in that,** in step S1, unwinding the base film into a station in the slit extrusion coating equipment corresponding to the first slit extrusion coating component through a double-station unwinder, and coating the electrode paste on the surface of the base film, and then placing the base film coated with the electrode paste on the surface into a first oven, drying and curing at 140 - 160 °C for 3 - 10 min to form an electrode; in step S2, transporting the base film formed with the electrode to a station corresponding to the second slit extrusion coating component through a guide rail, coating the carbon film slurry, and placing the base film formed with the electrode and the carbon slurry coating in a second oven, and then curing and drying at 100 - 130 °C for 3 - 10 min to obtain the electrothermal film.

7. The preparation method according to claim 1, **characterized in that,** the carbon film slurry has a particle size D90 of 0.5 - 75 µm, and the electrode paste has a particle size D90 of 1 - 75 µm.

8. The preparation method according to claim 1, **characterized in that,** the carbon film slurry contains cnts and hydrosoluble polyurethane resin.

9. A far-infrared electrothermal film, **characterized in that,** the far-infrared electrothermal film comprises a base film, an electrode and a carbon film which are stacked, the electrode is formed by coating electrode paste on a base film by means of slit coating and then drying and curing the electrode paste, the carbon film is formed by coating carbon film slurry on the above base film formed with the electrode by means of slit coating and then drying and curing the carbon film slurry, and when coating the carbon film slurry, the carbon film slurry covers at least part or all of the electrode, so that the part or all of the electrode is located between the carbon film and the base film,
the carbon film slurry is coated intermittently to form a plurality of carbon films distributed at intervals on one base film, and the carbon film slurry contains cnts and hydrosoluble polyurethane resin.

10. The far-infrared electrothermal film according to claim 9, **characterized in that,** each of the carbon films has a width of 500 - 1000 mm and a length of 0.01 - 6.45 m; and/or, the carbon film has a sheet resistance of 700 - 1750 Ω/sq; and/or, the conversion efficiency of electrothermal radiation of the electrothermal film is 75 - 85 %; and/or, the electrode has a width of 10 - 20 mm and a sheet resistance of 20 - 50 mΩ/sq; and/or, the electrode has a thickness of 3 - 7 µm, and the carbon film has a thickness of 5 - 20 µm; and/or, the plurality of carbon films extend along the length direction of the base film, and the distance between two adjacent carbon films is 10 - 50 mm.

11. The far-infrared electrothermal film according to claim 10, **characterized in that,** each of the carbon films has a length of 0.95 - 6.45 m; and/or, the distance between two adjacent carbon films is 30 - 50 mm.

12. The far-infrared electrothermal film according to claim 11, **characterized in that,** the electrode paste is coated intermittently, so that a plurality of electrodes distributed at intervals along the length direction of the base film are formed on one side of one base film; the plurality of carbon films and the plurality of electrodes are one-to-one correspondingly disposed.

13. The far-infrared electrothermal film according to any one of claims 9 to 12, **characterized in that,** the electrodes are respectively disposed on both sides of the base film in the width direction, each of the carbon films extends between two electrodes, and the projected area of the carbon film on the base film is larger than that of the base film between two electrodes.

14. The far-infrared electrothermal film according to claim 9, **characterized in that,** the far-infrared electrothermal film further comprises an insulating film that encapsulates the surface of the electrothermal film, the insulating film completely covers the electrothermal film, and a shielding layer is stacked on the surface of the insulating film to combine the electrothermal film with the shielding layer over the entire surface; and/or, the far-infrared electrothermal film comprises a first insulating film, a second insulating film, and a shielding layer, and the first insulating film, the electrothermal film, the second insulating film and the shielding layer are stacked.

15. The far-infrared electrothermal film according to claim 14, **characterized in that,** the width ratio of the shielding layer to the electrothermal film can be 0.7: 1 - 0.9: 1; and/or, the shielding layer has a thickness of 7 - 200 µm; and/or, the first insulating film and the second insulating film have a thickness of 50 - 250 µm, respectively.
